# EUROPÄISCHE PATENTSCHRIFT

(11) **EP 0 497 156 B1**
(45) Veröffentlichungstag und Bekanntmachung des Hinweises auf die Patenterteilung: **22.04.1998**
(21) Anmeldenummer: 92100699.5
(22) Anmeldetag: 17.01.1992
(51) Int. Cl.: C04B 35/58

(54) **Verfahren zur Herstellung eines Werkstoffes auf Siliciumnitrid-Basis.**
Method of making a silicon nitride based material.
Procédé de fabrication d'un matériau à base de nitrure de silicium.

(30) Priorität: 30.01.1991 DE 4102628
(43) Veröffentlichungstag der Anmeldung: 05.08.1992
(73) Patentinhaber: BAYER AG, 51368 Leverkusen (DE)
(72) Erfinder: Leimer, Gerhard, Dr., W-8633 Rödental (DE); Wötting, Gerhard, Dr., W-8630 Coburg (DE); Gugel, Ernst, Prof. Dr., W-8633 Rödental (DE)

(56) Entgegenhaltungen:
- EP-A- 0 377 408
- WO-A-82/04245
- US-A- 4 487 840
- CHEMICAL ABSTRACTS, vol. 111, no. 14, 2. Oktober 1989, Columbus, Ohio, US; abstract no. 119799T, M.MATSUNAKA: 'Manufacture of high-density silicon nitride ceramics' Seite 284 ;
- CHEMICAL ABSTRACTS, vol. 113, no. 6, 6. August 1990, Columbus, Ohio, US; abstract no. 45255E, H. ZHUANG ET AL.: 'Quick preparation of reaction-sintered compact silicon nitride articles' Seite 279 ;

## Beschreibung

Die vorliegende Erfindung betrifft ein Verfahren zur Herstellung eines Werkstoffes auf Basis von Si₃N₄ mit hoher Festigkeit und geringer Streuung der mechanischen Eigenschaften durch Formung einer pulverförmigen Ausgangsmischung aus Si₃N₄ und Sinteradditiven und anschließende Wärmebehandlung bis möglichst nahe an die theoretische Dichte.

Si₃N₄-Werkstoffe und -teile werden üblicherweise so hergestellt, daß sinterfähiges Si₃N₄-Ausgangspulver, gekennzeichnet durch eine hohe Feinheit und Reinheit, mit Sinteradditiven, wie MgO, Y₂O₃, Al₂O₃ und/oder ZrO₂ in Konzentrationen <15 Gew.-%, gemischt, geformt und anschließend durch eine Wärmebehandlung verdichtet wird. Die Wärmebehandlung kann unter atmosphärischem Stickstoffdruck durch Sintern oder axiales Heißpressen, oder unter erhöhtem Gasdruck in N₂ oder einer N₂-Inertgasmischung durch Gasdrucksintern oder heißisostatisches Pressen erfolgen. Dabei wird durch Reaktion der zugesetzten Sinteradditive mit dem in Siliciumnitrid-Ausgangspulvern üblicherweise vorhandenen Sauerstoff, der als SiO₂ oder Si₂N₂O vorliegend angenommen werden kann, eine flüssige Phase ausgebildet, wodurch Sintermechanismen, wie Kapillarkraft-induzierte Umlagerungen und Lösungs-Wiederausscheidungsvorgänge, stattfinden können, Diese Vorgänge werden durch oxidische Verunreinigung wie Alkalien, Erdalkalien, Eisen und sonstige Metalloxide gefördert, da diese mit zur Ausbildung der flüssigen Phase beitragen. Nach der Verdichtung verbleibt die flüssige Phase meist als glasige Sekundärphase in Korngrenzen und Tripelpunkten im Material und beeinflußt die Eigenschaften des Werkstoffes, vor allem bei höheren Temperaturen, negativ.

Neben dieser Beeinträchtigung der mechanischen Eigenschaften durch die Korngrenzphase können andere Verunreinigungen wie elementares Si, Metalle oder Silizide, die bei Temperaturen unterhalb der Sintertemperatur schmelzen, die mechanischen Eigenschaften beeinträchtigen, da die beim Schmelzen entstehenden kugelförmigen Tröpfchen von der flüssigen Phase kaum mehr aufgelöst werden. Diese Tröpfchen verbleiben nach dem Einfrieren als Fremdpartikel im Werkstoff und führen aufgrund ihrer unterschiedlichen Wärmedehnung und elastischen Eigenschaften im Vergleich zum Matrixmaterial zu Spannungskonzentrationen, die häufig als bruchauslösende Defekte wirken (Evans, A.G.: Non-destructive failure prediction in ceramics. In: F. L. Riley (ed.) "Progress in Nitrogen Ceramics", Martinus Nijhoff Publ., Boston, 1983, S. 595 bis 625).

Da die Festigkeit eines Materials somit durch derartige Einschlüsse vermindert wird, ist ein Qualitätskriterium für Si₃N₄-Pulver, daß ihr Gehalt sowohl an metallischen Verunreinigungen als auch an freiem Silicium so gering wie möglich ist.

Neben diesen partikulären Einschlüssen wirken große Poren, Lunker oder innere Risse, deren Ursachen meist auf Ausgangspulverinhomogenitäten, Granulatfehler oder Spannungen in den Formkörpern zurückgeführt werden können, als bruchauslösende Defekte und wirken festigkeitsvermindernd, verbunden mit einer Erhöhung der Wertestreuung. Spannungsbedingte Risse entstehen häufig erst beim Hochheizen auf die Sintertemperatur, gefördert durch thermische Gradienten in den Proben.

Aufgabe dieser Erfindung ist es nun, ein Verfahren zur Verfügung zu stellen, welches es in einfacher Weise erlaubt, Werkstoffe auf der Basis von Si₃N₄ mit hoher Festigkeit und zuverlässigen mechanischen Eigenschaften herzustellen.

Es wurde nun gefunden, daß im Gegensatz zu freiem Si als Verunreinigung im Si₃N₄-Ausgangspulver der gezielte Zusatz von Silicium zur Sintermischung, d.h. dem Ausgangsgemisch aus Si₃N₄-Pulver und Sinteradditiven, und eine geeignete Prozeßführung der Wärmebehandlung zu einer deutlichen Verbesserung des Festigkeitsniveaus bzw. generell der mechanischen Eigenschaften des Werkstoffes bis zu hohen Temperaturen führt. Gegenstand dieser Erfindung ist somit ein Verfahren zur Herstellung eines Werkstoffes auf Basis von Si₃N₄ mit hoher Festigkeit und geringer Streuung der mechanischen Eigenschaften durch Formung einer pulverförmigen Ausgangsmischung aus Si₃N₄-, Silicium- und Sinteradditivteilchen und anschließende Wärmebehandlung bis möglichst nahe an die theoretische Dichte des Formteils, dadurch gekennzeichnet, daß eine pulverförmige Ausgangsmischung aus Si₃N₄ und Sinteradditiven, die bei der Wärmebehandlung keine Reaktion mit dem Si eingehen, zusammen mit elementaren Si einer Feinheit <20 µm, wobei die Menge des Si zwischen 5 und 20 Gew.-% beträgt, geformt wird, unterhalb des Schmelzpunktes von Silicium das Silicium bei einem Stickstoffdruck von höchstens 1 bar vollständig in Si₃N₄ umgewandelt und abschließend das Formteil gesintert wird. Der Zusatz von Silicium ist in der Patentliteratur zwar beschrieben, Zielsetzung und Wirkungsweise jedoch völlig anders gelagert und dem Grundgedanken der vorliegenden Erfindung sogar entgegenstehend. So wird im US-Patent US-A 4 552 711 die vorteilhafte Wirkung von 1 bis 7 Gew.-% Silicium in einer Si₃N₄-Sintermischung auf die Verdichtung angegeben. Im Gegensatz zur vorliegenden Erfindung wird allerdings das Vorhandensein von freiem Silicium während des Sinterprozesses gefordert und zwar zur Unterdrückung der Siliciumnitrid-Zersetzung infolge des durch das freie Silicium vorhandenen Silicium-Dampfdruckes. Die Realisierung von freiem Silicium während der Sinterphase wird durch Verwendung von relativ grobem Silicium erreicht. Dabei sind jedoch bei einer durchaus hohen Verdichtung keine besonders günstigen Festigkeiten zu erwarten und Festigkeiten auch tatsächlich nicht aufgeführt.

Der vorliegenden Erfindung dagegen liegt die vollständige Umwandlung des Siliciums in Si₃N₄ noch vor der Verdichtungsphase zugrunde, mit resultierenden hohen Festigkeiten und geringen Streuungen, selbst bei großvolumigen Bauteilen.

In der EP-A 0 313 382 wird ein Verfahren zur Herstellung von Siliciumnitrid-Bauteilen durch Beschichtung von Si₃N₄-Pulver mit Silicium, anschließender Formgebung derart beschichteter Pulver zu Bauteilen, anschließender Nitridierung und gegebenenfalls wiederum anschließende Sinterung beschrieben, Als Vorteil werden wesentlich kürzere Nitridierzeiten angegeben gegenüber Formkörpern aus reinem Silicium, Dies weist darauf hin, daß es sich im Gegensatz zum Gegenstand dieser Erfindung nicht um gesintertes Siliciumnitrid, sondern um reaktionsgesintertes Siliciumnitrid handelt, das gegebenenfalls in einem weiteren getrennten Schritt nachgesintert werden kann. Es werden keinerlei Eigenschaften genannt.

In einer japanischen Patentanmeldung JP-A 60/215 576 wird die Herstellung von Sialonen durch Mischung von Silicium, Si₃N₄, Al₂O₃ und ZrO₂ beschrieben, wobei die Silicium-Siliciumnitrid-Mischung 90 bis 20 Vol-% Silicium und 10 bis 80 Vol-% Siliciumnitrid enthält, Es werden nur sehr mäßige Festigkeiten erreicht.

Ähnliche Ergebnisse werden in der japanischen Patentanmeldung JP-A 60/16 870 berichtet, wo anstelle von Zirkonoxid Magnesiumoxid neben Aluminiumoxid als Zusatz verwendet wird und die Silicium-Si₃N₄-Mischung 100 bis 20 Vol-% Silicium und 0 bis 80 Vol-% Siliciumnitrid enthält.

Ähnlich wie im US-Patent US-A 4 552 711 wird in der japanischen Patentanmeldung JP-A 62/83 373 der vorteilhafte Zusatz von Silicium zu Siliciumnitrid und Sinteradditiven auf die Unterdrückung der Zersetzung von Si₃N₄ zurückgeführt, demzufolge im Gegensatz zur vorliegenden Erfindung noch freies Silicium während der Sinterung vorliegen muß. Die maximale Silicium-Konzentration wird mit 5 Gew.-% angegeben und in einem einzigen Beispiel werden nur 2 % erwähnt. Dies steht kraß im Gegensatz zur vorliegenden Erfindung, wo gerade alles Silicium noch vor der Sinterung in Siliciumnitrid umgewandelt wird und gerade mehr Silicium wegen der Exothermie und der homogeneren Gefügeausbildung sich als vorteilhaft erweist.

In den japanischen Patentanmeldungen JP-A 57/166 375 bis 57/166 380 wird neben Titan, Chrom, Aluminium, Magnesium, Beryllium, Calcium, Zirkonium, Barium und Lithium auch Silicium als vorteilhaft zur Reduzierung von auf der Oberfläche der Siliciumnitridpulver haftenden Oxiden beschrieben und dementsprechend eine Temperaturbehandlung unter reduzierender Atmosphäre unter der Sintertemperatur empfohlen. Diese Lehre steht klar im Gegensatz zur hier vorliegenden Erfindung und stellt auch keine Anregung zur vorliegenden Erfindung dar, sondern führt im Gegenteil von der Erfindungsidee weg. Zusätzlich sind die Werkstoffe nach dieser Erfindung nicht dicht und demnach auch die Festigkeit entsprechend niedrig.

Aus JP-A-01 52 678 ist ein Verfahren zur Herstellung von Si₃N₄-Werkstoffen bekannt, wobei 20 - 45 Gew.-% Siliciumpulver mit 40 - 80 Gew.-% Siliciumnitrid und 0,5 - 15 Gew.-% einer Verbindung eines Gruppe-3A-Elementes unter Stickstoffatmosphäre von mehr als 2 bar umgesetzt werden. Ausdrücklich wird darauf hingewiesen, daß bei einer Reaktion unterhalb von 2 bar keine vollständige Umsetzung des Silicium in Siliciumnitrid erfolgt, was sich nachteilig auf die Festigkeit der hergestellten Werkstoffe auswirkt.

Beim erfindungsgemäßen Verfahren werden die positiven Effekte gefunden, vorausgesetzt die Temperatur- und Atmosphärenbedingungen beim Sintern werden so gestaltet, daß eine vollständige Umsetzung des Si mit Stickstoffgas zu Si₃N₄ vor Erreichen des Schmelzpunktes von Si (ca. 1,400°C) und vor Einsetzen der Flüssigphasenbildung entsprechend oben beschriebenen Reaktionsverlaufs erfolgt. Konzentrationen von mehr als 20 % Si können infolge starker Exothermie beim Sintern zu Schwierigkeiten und unvorteilhaft langen Zykluszeiten führen.

Ein weiteres Kriterium für die besondere Wirksamkeit des Si-Zusatzes ist die Art des verwendeten Sinteradditivs. Im Fall von Oxiden muß im Temperaturbereich der Nitridierung (ca. 1,000 bis 1,500°C) das Sinteradditiv eine stärker negative freie Bildungsenthalpie aufweisen als die Oxidation des freien Si. Ist dies nicht der Fall, so wird das Si das zugesetzte Oxid reduzieren unter gleichzeitiger Oxidation des Si, wodurch die im folgenden beschriebenen Effekte des Zusatzes von Silicium zur Sintermischung nicht eintreten werden. Aus Tafeln der thermodynamischen Daten, wie z.B. JANAF Thermochemical Tables, NSRDS NBS 37, 1971, kann entnommen werden, daß somit folgende Oxide geeignete Sinteradditive für das erfindungsgemäße Verfahren sind: Li₂O, BeO, MgO, CaO, SrO, BaO, Al₂O₃, Sc₂O₃, Y₂O₃, La₂O₃ und alle weiteren Seltenen Erdenoxide, TiO₂, ZrO₂, HfO₂.

Ungeeignet sind dagegen Oxide, deren freie Bildungsenthalpie geringer (weniger negativ) ist als die Oxidation des Siliciums. Dies sind folgende Oxide: Na₂O, K₂O, B₂O₃, V₂O₅, Ta₂O₅, Cr₂O₃, MnO₂, FeO, Fe₂O₃, CoO, NiO, CuO, ZnO usw. Diese Verbindungen werden durch Si zu den Elementen reduziert, die mit Si₃N₄ unter Bildung von Siliciden, Nitriden oder sonstigen Mischphasen reagieren, die aufgrund ihres zum Si₃N₄-unterschiedlichen thermischen Ausdehnungsverhalten und der unterschiedlichen elastischen Eigenschaften wiederum zu Spannungskonzentrationen und damit zu festigkeitsvermindernden Defekten werden würden, wie oben beschrieben wurde.

Ähnliches gilt für den Zusatz von Nitriden als Sinteradditive, entweder alleine oder in Kombination mit Oxiden. Auch hierbei muß die freie Bildungsenthalpie des Nitrids im Temperaturbereich 1.000 bis 1.500°C negativer sein als die der Reaktion von Si mit N₂ zu Si₃N₄. Ansonsten würde das zugesetzte Si das nitridische Sinteradditiv reduzieren. Der verbleibende elementare Rest würde, wie bei den Oxiden beschrieben, mit dem Si₃N₄-Matrixmaterial weiterreagieren und unerwünschte Phasen ausbilden. Somit umfaßt die erfindungsgemäß geeigneten nitridischen Sinteradditive oder Zusätze folgende Gruppe: Be₃N₂, BN, AlN, ScN, YN, LaN und sonstige Seltenen Erden-Nitride, TiN, ZrN, HfN, NbN, TaN usw. Ungeeignet sind dagegen: Li₃N, Mg₃N₂, Ca₃N₂, Sr₃N₂, Ba₃N₂, VN, CrN, Mo₂N, MnN, Fe₃N.

Besonders bevorzugt ist somit die Ausführungsform des erfindungsgemäßen Verfahrens, bei welcher als Sinteradditive einzeln oder in Kombination Li₂O, BeO, MgO, CaO, SrO, BaO, Al₂O₃, Sc₂O₃, Y₂O₃, La₂O₃ und alle weiteren Seltenen Erdenoxide, TiO₂, ZrO₂, HfO₂ und/oder Be₃N₂, BN, AlN, ScN, YN, LaN und sonstige Seltenen Erden-Nitride, TiN, ZrN, HfN, NbN, TaN und/oder SiC oder B₄C in Mengen von bis zu 15 Gew.-%, bezogen auf die Gesamtmischung, eingesetzt werden.

Besonders gute Resultate werden also dann erreicht, wenn die Sinteradditive solche sind, die unter den Sinterbedingungen keine Reaktion mit dem zugesetzten Silicium eingehen.

Der Unterschied in der Wirkungsweise zwischen freiem, gezielt zugesetztem Si und freiem Si als Verunreinigung in Si₃N₄-Ausgangspulvern kann darin gesehen werden, daß letzteres innerhalb von Si₃N₄-Körnern eingeschlossen und somit vor einer Reaktion mit Stickstoff abgeschirmt ist. Wird nun das Si₃N₄-Korn durch den beschriebenen Lösungs-Wiederausscheidungsvorgang beim Sintern aufgelöst, so verbleibt das (geschmolzene) Si-Kügelchen in der flüssigen Phase wiederum abgeschirmt. Durch Kombination mit weiteren Si-Einschlüssen oder aber auch durch Reaktion mit der flüssigen Phase können daraus die oben beschriebenen festigkeitsbestimmenden Defekte resultieren.

Wird dagegen gemäß dem erfindungsgemäßen Verfahren das Si gezielt zugesetzt und seitens der Prozeßführung gewährleistet, daß es bis zu seiner vollständigen Reaktion mit Stickstoff zu Si₃N₄ dem Gas zugänglich ist, so wird zunächst durch den mit dieser Umsetzung verbundenen Volumenzuwachs von ca. 20 Vol-% die Dichte des Formkörpers erhöht, Dadurch wird die Sinterung erleichtert, da zur vollständigen Verdichtung weniger Materialtransport notwendig ist. Dies vermindert die Gesamtschwindung, wodurch auch die Gefahr der Ausbildung innerer Risse infolge von Schwindungsunterschieden zwischen der Probenoberfläche und dem Probeninneren reduziert wird. Dieser Effekt trägt somit zur Erhöhung des Festigkeitsniveaus und zur Verminderung der Streuung der Einzelwerte bei.

Ein weiterer positiver Effekt durch die Anwendung des erfindungsgemäßen Verfahrens resultiert aus der Art der Umsetzung des Si zum Si₃N₄. Hierzu ist bekannt, daß zumindest ein Teil der Reaktion über die Gasphase erfolgt, wodurch das neu formierte Produkt sich in Poren und sonstigen Hohlräumen des Formkörpers niederschlägt. Dadurch wird einerseits die Gesamtporosität reduziert, was gleichbedeutend mit der oben beschriebenen Erhöhung der Gründichte ist. Aus Bestimmungen der Porengrößenverteilungen, z.B. mittels Hg-Druckporosimeter, wird auch ersichtlich, daß die gesamte Porengrößenverteilung zu kleineren Werten verschoben wird, Dies wirkt sich wiederum günstig auf das Sinterverhalten sowie die Höhe der sich beim Sintern ausbildenden Spannungen aus, da die Schwindung entsprechend vermindert wird. Gleichzeitig erfolgt jedoch eine Reduktion der Größe von Defekten in Formkörpern, z.B. großen Poren, Lunkern oder Preßrissen, was beim Sintern bessere Voraussetzungen zu deren Ausheilung schafft. Dadurch werden mögliche kritische Defekte in ihrer Größe reduziert, was gleichbedeutend mit einer Erhöhung des Festigkeitsniveaus und der Zuverlässigkeit ist.

Aufgrund der Natur des Reaktionsablaufs zwischen Si und N₂ resultiert ein weiterer Vorteil aus der Wärmefreisetzung. Es ist bekannt, daß diese Umsetzung ein exothermer Prozeß ist, wobei pro Mol-Si ca. 720 kJ freigesetzt werden. Diese Wärmeentwicklung führt zu einem weitgehenden Temperaturausgleich innerhalb des Formkörpers bei ca. 1.400°C, d.h. geringfügig unterhalb der Temperatur der Ausbildung der flüssigen Phase bzw. dem Beginn der Sinterung. Dadurch werden Temperaturgradienten, die zu unterschiedlicher Schwindung und somit zur Ausbildung von Mikro- als auch Makrorissen in Proben, vor allem aber in großvolumigen Bauteilen, führen können, vermindert und die Formierung derartiger festigkeitsbestimmender Defekte verhindert.

Die erfindungsgemäßen Ergebnisse werden erzielt, wenn die Sinterung unter atmosphärischem oder erhöhtem N₂-Druck, einschließlich Heißisostatischem Pressen (HIPen) oder durch axiales Heißpressen erfolgt. Werkstoffe mit besonders guten Eigenschaften werden erhalten, wenn sie durch eine Gasdrucksinterung hergestellt werden.

Bei Anwendung des erfindungsgemäßen Verfahrens ergibt sich somit, insbesondere aus der Kombination all dieser Effekte, verbunden mit dem Einsatz der erfindungsgemäß bevorzugten Sinteradditive, eine signifikante Festigkeitssteigerung von Si₃N₄-Werkstoffen, verbunden mit einer signifikanten Verminderung der Streuung der Einzelwerte, d.h. einer Erhöhung der Zuverlässigkeit des Materials, sowohl von Prüfkörpern als auch von größeren komplex geformten Teilen.

Die Werkstoffe, die nach dem erfindungsgemäßen Verfahren erhalten werden, sind gut geeignet für die Herstellung von keramischen Bauteilen, die bei ihrer Anwendung hohen mechanischen, thermischen, korrosiven und/oder abrasiven Belastungen ausgesetzt sind. Dabei können die Bauteile von unterschiedlichster Geometrie und Wandstärke sein. Besonders bevorzugt ist die Verwendung für dickwandige keramische Teile in Verbrennungskraftmaschinen und die Verwendung für die Herstellung von hochbeanspruchten keramischen Bauteilen, insbesondere von dickwandigen keramischen Armaturen oder Schneidwerkzeugen.

Im folgenden wird die Erfindung beispielhaft erläutert, ohne daß hierin eine Einschränkung zu sehen ist.

### Beispiele

### Beispiel 1

Es werden 5 Ansätze verglichen, die einen Basisansatz A ohne Si-Zusatz sowie äquivalente Zusätze von 5 % Si(B), 10 % Si(C), 20 % Si(D) und 25 % Si(E) zu diesem Basisansatz umfassen. Als Sinteradditive werden konstant 5 Gew.-% Y₂O₃ + 1 Gew.-% Al₂O₃ zugesetzt (spezifische Oberfläche jeweils ≥ 5 m²/g. Reinheit = 99 %).

Das eingesetzte Si₃N₄-Pulver weist eine spezifische Oberfläche von ca. 20 m² /g, einen Sauerstoffgehalt von ca. 1,8 Gew.-% und einen Gesamtgehalt an metallischen Verunreinigungen von ≤ 0,15 Gew.-% auf.

Das eingesetzte Si-Pulver weist eine Feinheit ≤ 20 µm und eine Reinheit ≥ 98 % auf.

Die Mischungen werden hergestellt durch Mahlung in einem flüssigen H₂O-freien Medium, wie Alkohol, werden anschließend eingedampft, getrocknet, gesiebt und zu Prüfkörpern, hier zu Platten von 60x70x8 mm, verpreßt.

Das Aufheizen bis zur maximalen Sintertemperatur Ts erfolgte unter konstanten Bedingungen in einem graphitwiderstandsbeheizten Gasdrucksinterofen bis 100 bar wie folgt:

| Segment-Nr. | Aufheizzeit [min] | Zieltemperatur [°C] | Haltezeit [min] | Gasdruck (N₂) [bar] |
|---|---|---|---|---|
| 1 | 60 | 1.000 | 30 | ≤ 0.01 |
| 2 | 60 | 1.200 | - | 1 |
| 3 | 120 | 1.400 | - | 1 |
| 4 | 60 | Ts | | |

Die Bedingungen bei Ts unterscheiden sich, je nachdem, ob eine sogenannte Niederdrucksinterung oder Gasdrucksinterung durchgeführt wurde und sind in der folgenden Ergebnistabelle mit aufgeführt.

Die Bestimmung der Sinterdichte erfolgte nach dem archimetrischen Prinzip in Wasser, die Bestimmung der Biegefestigkeit bei Raumtemperatur an geschliffenen Prüfkörpern der Dimension 3 x 4 x 45 mm nach dem DIN-Entwurf 51 110 vom Februar 1990.

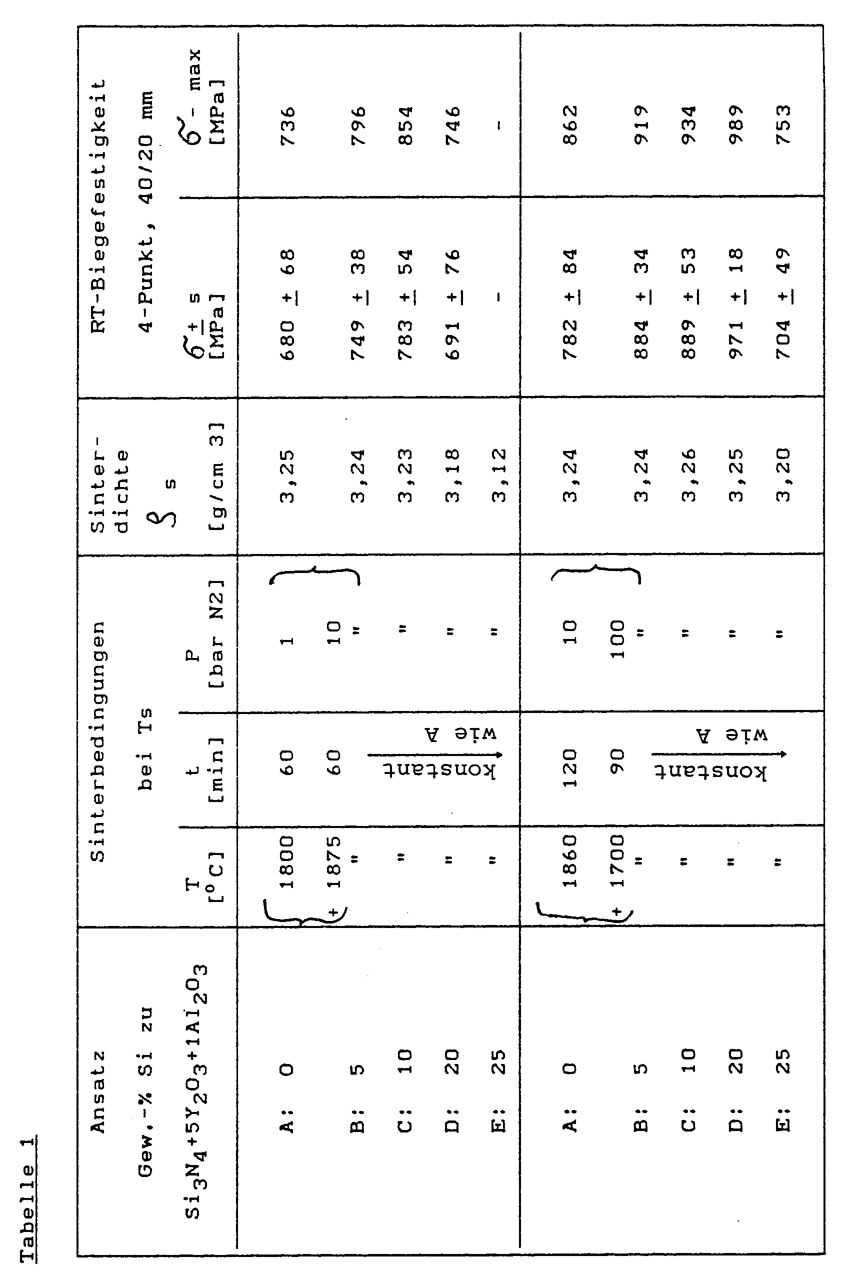

Wie anhand der Ergebnisse ersichtlich ist, erreichen bei etwa gleicher Sinterdichte die Si-versetzten Ansätze jeweils höhere Festigkeitsmittel- und maximalwerte als der Si-freie Vergleichsansatz A. Desweiteren weisen die Proben der Si-versetzten Ansätze jeweils deutlich geringere Streuungen der Festigkeitswerte auf. Die Effekte treten unabhängig von den gewählten Sinterbedingungen auf, nach einer Gasdrucksinterung allerdings auf einem insgesamt erhöhten Festigkeitsniveau.

### Beispiel 2

Ziel hierbei ist, den positiven Effekt der Exothermie der Si-Umsetzung während der Sinterung auf die resultierenden RT-Festigkeiten dickwandiger Prüfkörper zu demonstrieren. Verglichen werden hierzu die Ansätze A und D aus Beispiel 1, wobei jeweils Ergebnisse von Platten mit 8 mm Dicke mit solchen von 20 mm Dicke im Grünzustand gegenübergestellt werden. Die eingesetzten Stoffe, Ansatzaufbereitung und Probenherstellung sind identisch mit dem Beispiel 1.

**Tabelle 2**

| Ansatz Gew.-% Si zu Si₃N₄+5Y₂O₃+1Al₂O₃ | Sinterbedingungen bei Ts | | | Sinterdichte ρ s [g/cm 3] | RT-Biegefestigkeit 4-Punkt, 40/20 mm | |
|---|---|---|---|---|---|---|
| | T [°C] | t [min] | P [bar N2] | | σ ± s [MPa] | σ - max [MPa] |
| A: 0; 8 mm dick | 1860 | 120 | 10 | 3,24 | 782 ± 84 | 862 |
| | + 1700 | 90 | 100 | | | |
| D: 20; 8 mm dick | 1860 | 120 | 10 | 3,25 | 971 ± 18 | 989 |
| | + 1700 | 90 | 100 | | | |
| A: 0; 20 mm dick | 1860 | 120 | 10 | 3,23 | 736 ± 106 | 876 |
| | + 1700 | 90 | 100 | | | |
| D: 20; 20 mm dick | 1860 | 120 | 10 | 3,25 | 843 ± 59 | 894 |
| | + 1700 | 90 | 100 | | | |

Aus den Ergebnissen dieses Beispiels ist ersichtlich, daß die Schwierigkeiten, die beim Sintern dickwandiger Körper auftreten und zu einer Reduktion des Festigkeitsniveaus und einer Erhöhung der Wertestreuung führen (Ansatz A), durch Si-Zusatz zur Ausgangsmischung signifikant vermindert werden können. Die Ursache hierfür ist in der Gesamtheit der aufgeführten Effekte, vor allem aber im Temperaturausgleich innerhalb der Probe zu Beginn der Sinterung infolge der Exothermie der Si-Umsetzung zu sehen.

### Beispiel 3

In diesem Beispiel wird, basierend auf den ausgeführten Überlegungen zur thermodynamischen Stabilität der Sinteradditive, die Bedeutung der Wahl des Sinteradditivs demonstriert. Verglichen wird der Basisansatz mit 5 Y₂O₃ + 1 Al₂O₃ (Gew.-%) mit einem Ansatz, der als Sinteradditiv 9,3 Ta₂O₅ + 0,96 Al₂O₃ (Gew.-%; entspricht molar 5 Gew.-% Y₂O₃ + 1 Gew.-% Al₂O₃) enthält, jeweils in der Variante mit und ohne Si-Zusatz. Als Ta₂O₅ wurde eine Qualität mit einer spezifischen Oberfläche von ca. 5 m²/g und einer Reinheit von ≥ 99,8 % eingesetzt. Die weiteren eingesetzten Stoffe, Ansatzaufbereitung und Probenherstellung sind identisch mit dem Beispiel 1.

**Tabelle 3**

| Ansatz Gew.-% Si zum (Basisansatz) | Sinterbedingungen bei Ts | | | Sinterdichte ρ s [g/cm 3] | RT-Biegefestigkeit 4-Punkt, 40/20 mm | |
|---|---|---|---|---|---|---|
| | T [°C] | t [min] | P [bar N2] | | σ ± s [MPa] | σ - max [MPa] |
| A: 0(5 Y₂O₃/1 Al₂O₃) | 1800 | 60 | 1 | 3,25 | 680 ± 68 | 736 |
| | + 1875 | 60 | 10 | | | |
| F: 0(9,3 Ta₂O₅/0,95 Al₂O₃) | 1800 | 60 | 1 | 3,34 | 615 ± 54 | 674 |
| | + 1875 | 60 | 10 | | | |
| B: 5(5 Y₂O₃/1 Al₂O₃) | 1800 | 60 | 1 | 3,24 | 749 ± 38 | 796 |
| | + 1875 | 60 | 10 | | | |
| G: 5(9,3 Ta₂O₅/0,95 Al₂O₃) | 1800 | 60 | 1 | 3,32 | 542 ± 72 | 622 |
| | + 1875 | 60 | 10 | | | |

In der gesinterten Probe G sind im Gegensatz zur Probe F röntgenographisch TaN- und TaSi-Phasen nachweisbar, was zeigt, daß infolge der thermodynamischen Instabilität von Ta₂O₅ in Gegenwart von Si ein anderer Reaktionsablauf eintritt, der die Sinterung hemmt und zur Ausbildung festigkeitsvermindernder Defekte führt.

## Patentansprüche

1. Verfahren zur Herstellung eines Werkstoffes auf Basis von Si₃N₄ mit hoher Festigkeit und geringer Streuung der mechanischen Eigenschaften durch Formung einer pulverförmigen Ausgangsmischung aus Si₃N₄-, Silicium- und Sinteradditivteilchen und anschließende Wärmebehandlung bis möglichst nahe an die theoretische Dichte des Formteils, dadurch gekennzeichnet, daß eine pulverförmige Ausgangsmischung aus Si₃N₄ und Sinteradditiven, die bei der Wärmebehandlung keine Reaktion mit dem Si eingehen, zusammen mit elementaren Si einer Feinheit <20 µm, wobei die Menge des Si zwischen 5 und 20 Gew.-% beträgt, geformt wird, unterhalb des Schmelzpunktes von Silicium das Silicium bei einem Stickstoffdruck von höchstens 1 bar vollständig in Si₃N₄ umgewandelt und abschließend das Formteil gesintert wird.

2. Verfahren gemäß Anspruch 1, dadurch gekennzeichnet, daß als Sinteradditive einzeln oder in Kombination Li₂O, BeO, MgO, CaO, SrO, BaO, Al₂O₃, Sc₂O₃, Y₂O₃, La₂O₃ und alle weiteren Seltenen Erdenoxide, TiO₂, ZrO₂, HfO und/oder Be₃N₂, BN, AlN, ScN, YN, LaN und sonstige Seltenen Erdennitride, TiN, ZrN, HfN, NbN, TaN und/oder SiC oder B₄C in Mengen von bis zu 15 Gew.-%, bezogen auf die Gesamtmischung, eingesetzt werden.

3. Verfahren gemäß einem der Ansprüche 1 oder 2, dadurch gekennzeichnet, daß das Sintern unter atmosphärischem oder erhöhtem N₂-Druck einschließlich Heißisostatischem Pressen (HIPen) oder durch axiales Heißpressen erfolgt.

4. Verfahren gemäß Anspruch 3, dadurch gekennzeichnet, daß die Sinterung unter erhöhtem Stickstoffdruck vorgenommen wird.

## Claims

1. Process for the production of a high-strength material based on Si₃N₄ with a narrow spread of mechanical properties by shaping a pulverulent starting mixture of particles of Si₃N₄, silicon and sintering additives and subsequently performing heat treatment to as close as possible to the theoretical density of the shaped article, characterised in that a pulverulent starting mixture of Si₃N₄ and sintering additives, which do not enter into a reaction with the Si during heat treatment, together with elemental Si of a fineness of <20 µm, wherein the quantity of Si is between 5 and 20 wt.%, is shaped, the silicon is completely converted into Si₃N₄ at a temperature below the melting point of silicon at a nitrogen pressure of at most 1 bar and the shaped article is then sintered.

2. Process according to claim 1, characterised in that Li₂O, BeO, MgO, CaO, SrO, BaO, Al₂O₃, Sc₂O₃, Y₂O₃, La₂O₃ and all other rare earth oxides, TiO₂, ZrO₂, HfO and/or Be₃N₂, BN, AlN, ScN, YN, LaN and other rare earth nitrides, TiN, ZrN, HfN, NbN, TaN and/or SiC or B₄C are used as the sintering additives in quantities of up to 15 wt.%, relative to the entire mixture.

3. Process according to one of claims 1 or 2, characterised in that sintering proceeds under atmospheric or elevated N₂ pressure, including hot isostatic pressing (HIP) or by axial hot pressing.

4. Process according to claim 3, characterised in that sintering is performed under elevated nitrogen pressure.

## Revendications

1. Procédé de préparation d'un matériau à base de Si₃N₄ à résistance élevée et faible dispersion des propriétés mécaniques par moulage d'un mélange de départ en poudre constitué de particules de Si₃N₄, silicium et additifs de frittage et ensuite traitement thermique jusqu'à la meilleure proximité possible de la densité théorique de la pièce moulée, caractérisé en ce qu'on moule un mélange de départ en poudre constitué de Si₃N₄ et d'additifs de frittage, qui lors du traitement thermique ne subissent pas de réaction avec le Si, en présence de Si élémentaire ayant une finesse meilleure que 20 µm, où la quantité du Si est comprise entre 5 et 20% en poids, on transforme en dessous du point de fusion du silicium le silicium sous une pression d'azote au plus de 1 bar complètement en Si₃N₄ et ensuite on fritte la pièce moulée.

2. Procédé selon la revendication 1, caractérisé en ce qu'on utilise comme additifs de frittage individuellement ou en combinaison Li₂O, BeO, MgO, CaO, SrO, BaO, Al₂O₃, Sc₂O₃, Y₂O₃, La₂O₃ et tous les autres oxydes de terres rares, TiO₂, ZrO₂, HfO₂ et/ou Be₃N₂, BN, AlN, ScN, YN, LaN et d'autres nitrures de terres rares, TiN, ZrN, HfN, NbN, TaN et/ou SiC ou B₄C en des quantités pouvant atteindre 15% en poids, par rapport au mélange total.

3. Procédé selon l'une des revendications 1 ou 2, caractérisé en ce que le frittage a lieu sous pression de N₂ atmosphérique ou supérieure, y compris le pressage isostatique à chaud ou par pressage à chaud axial.

4. Procédé selon la revendication 3, caractérisé en ce qu'on réalise le frittage sous pression d'azote accrue.
